# EUROPEAN PATENT APPLICATION

(11) **EP 4 760 796 A1**
(43) Date of publication of application: **17.06.2026**
(21) Application number: 25222751.7
(22) Date of filing: 11.12.2025
(51) Int. Cl.: H01M 4/131, H01M 4/36, H01M 4/525, H01M 4/58, H01M 4/62, H01M 10/0525

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 13.12.2024 KR 20240185921
(71) Applicant: SAMSUNG SDI CO., LTD., Yongin-si, Gyeonggi-do 17084 (KR)
(72) Inventor: KANG, Gwiwoon, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Minchul, 17084 Yongin-si (KR); LEE, Soonrewl, 17084 Yongin-si (KR); KIM, Young-Ki, 17084 Yongin-si (KR)
(74) Representative: Marks & Clerk LLP

(57) **Abstract**

A positive electrode active material includes: (a) a first particle of a lithium iron phosphate-based compound having an olivine crystal structure and a first average particle diameter; (b) a second particle of a lithium iron phosphate-based compound having an olivine crystal structure and a second average particle diameter smaller than the first average particle diameter; and (c) a third particle of a lithium nickel-cobalt-based oxide compound having a layered crystal structure, the first particle being in the form of a spherical secondary particle formed from aggregation of a plurality of primary particles, and the second particle being in the form of a single particle. Also disclosed is a positive electrode including the positive electrode active material, and a rechargeable lithium battery including the positive electrode.

## Description

### BACKGROUND

### 1. Field

The present invention relates to a positive electrode active material for a rechargeable lithium battery, a positive electrode including the same, and a rechargeable lithium battery including the same, and for example, relates to a positive electrode active material including an olivine-structured lithium compound and a layered-structured lithium compound, a positive electrode including the same, and the rechargeable lithium battery including the same.

### 2. Description of the Related Art

Recently, with the rapid proliferation of battery-powered electronic devices (such as mobile phones and/or notebook computers) and/or electric vehicles, the demand for rechargeable batteries with high energy density and large capacity has been increasing significantly. In response, extensive research and development efforts have been made to enhance the performance of such rechargeable batteries, particularly rechargeable lithium batteries.

A rechargeable lithium battery generally includes a positive electrode, a negative electrode, and an electrolyte. Each of the positive electrode and the negative electrode contains an active material that is capable of lithium-ion intercalation and deintercalation. Electrical energy is generated through oxidation and reduction reactions as lithium ions move between the electrodes during charging and discharging. For example, during discharge, electrical energy is generated when lithium ions are intercalated into the positive electrode and/or deintercalated from the negative electrode.

### SUMMARY

One or more embodiments of the present invention are directed toward a positive electrode active material with excellent (e.g., enhanced/suitable) capacity, high energy density, and excellent (e.g., enhanced/suitable) lifespan characteristics.

One or more embodiments of the present disclosure are directed toward a rechargeable lithium battery with high energy density, high operating voltage, and excellent or suitable lifespan characteristics.

Additional aspects will be set forth in part in the description which follows and, in part, will be apparent from the description, or may be learned by practice of the presented embodiments of the disclosure.

According to a first aspect of the present invention there is provided a positive electrode active material including: (a) a first particle having an olivine crystal structure, and having a first average particle diameter; (b) a second particle having an olivine crystal structure, and having a second average particle diameter smaller than the first average particle diameter; and (c) a third particle having a layered crystal structure. Each of the first particle and the second particle includes a compound represented by Chemical Formula 1 below, and the third particle includes a compound represented by Chemical Formula 2 below. The first particle has a form of a spherical secondary particle including a plurality of primary particles aggregated (e.g., agglomerated) with each other, and the second particle has a form of a single particle, wherein:

### Chemical Formula 1

Liₐ₁Feₓ₁B1_{y1}PO_{4-b1}

wherein, in Chemical Formula 1, 0.8≤a1≤1.2, 0.90≤x1≤0.999, 0.001≤y1≤0.1, 0≤b1≤0.05, and 0.99≤x1+y1≤1.05 (for example, 0.99≤x1+y1≤1.01), and B1 is at least one element selected from among titanium (Ti), magnesium (Mg), vanadium (V), aluminium (Al), manganese (Mn), and/or a combination thereof, and

### Chemical Formula 2

Liₐ₂Niₓ₂Co_{y2}Ma_{z2}X_{c2}O_{2-b2}

wherein, in Chemical Formula 2, 0.8≤a2≤1.2, 0.8≤x2<1.0, 0<y2≤0.1, 0<z2≤0.1 0≤c2≤0.05, 0≤b2≤0.05 and 0.9≤x2+y2+z2+c2≤1.1, Ma is at least one element selected from among Al, Mn, and/or a combination thereof, and X is at least one element selected from among Ti, Mg, zirconium (Zr), Al, and/or a combination thereof.

According to a second aspect of the present invention there is provided a positive electrode for a rechargeable lithium battery including: (a) a positive electrode current collector; and (b) a positive electrode active material layer on the positive electrode current collector, wherein the positive electrode active material layer includes the aforementioned positive electrode active material of the first aspect of the invention, a conductive material, and a binder.

According to a third aspect of the present invention there is provided a rechargeable lithium battery including: (a) the aforementioned positive electrode of the second aspect of the invention; (b) a negative electrode, including a negative electrode current collector and a negative electrode active material layer on the negative electrode current collector; and (c) a separator between the positive electrode and the negative electrode.

For example, the present invention provides a positive electrode active material that combines olivine-structured particles of different sizes with a layered-structured particle to achieve a balance of structural stability, conductivity, and electrochemical performance. The utilization of a first particle in the form of a spherical secondary particle composed of aggregated primary particles, alongside a second, smaller single particle, both having an olivine crystal structure, enables improved packing density and lithium-ion transport. The inclusion of a third particle with a layered crystal structure further enhances capacity and energy density. These structural and compositional features, defined by Chemical Formulae 1 and 2, contribute to a positive electrode active material that supports high energy density, excellent cycle life, and stable operation at high voltage and high temperature.

At least some of the above and other features of the invention are set out in the claims.

### BRIEF DESCRIPTION OF DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 illustrates a simplified conceptual diagram showing a rechargeable lithium battery according to one or more embodiments of the present disclosure.
FIG. 2 illustrates a simplified diagram showing a cylindrical rechargeable lithium battery according to one or more embodiments of the present disclosure.
FIG. 3 illustrates a simplified diagram showing a prismatic rechargeable lithium battery according to one or more embodiments of the present disclosure.
FIG. 4 illustrates a simplified diagram showing a pouch-type(kind) rechargeable lithium battery according to one or more embodiments of the present disclosure.
FIG. 5 illustrates a simplified diagram showing an alternative pouch-type(kind) rechargeable lithium battery according to one or more embodiments of the present disclosure.
FIG. 6 illustrates an enlarged view showing a positive electrode active material layer of a rechargeable lithium battery according to one or more embodiments of the present disclosure.
FIG. 7A shows a pair of scanning electron microscope (SEM) images showing a positive electrode active material of Preparation Example 1 of the present disclosure.
FIG. 7B shows a pair of scanning electron microscope (SEM) images showing a positive electrode active material of Preparation Example 2 of the present disclosure.
FIG. 7C shows a pair of scanning electron microscope (SEM) images showing a positive electrode active material of Preparation Example 3 of the present disclosure.

### DETAILED DESCRIPTION

To fully understand the configuration and effects of the present disclosure, one or more example embodiments will be described with reference to the accompanying drawings. However, the present disclosure is not limited to the following example embodiments and may be implemented in one or more suitable forms. The example embodiments are provided solely to illustrate the present disclosure and to enable those skilled in the art to fully understand its scope.

In this disclosure, if (e.g., when) an element is described as being "on" another element, it may be directly on the other element, or one or more intervening elements may be present therebetween. In contrast, if (e.g., when) an element is referred to as being "directly on" another element, there are no intervening elements present therebetween. In the drawings, certain thicknesses may be exaggerated to better illustrate technical details. Throughout the disclosure, like reference numerals indicate like elements, and thus duplicative descriptions thereof may not be provided for conciseness.

Unless otherwise specially noted in this disclosure, the expression of singular form may include the expression of plural form. For example, the singular forms "a," "an," "one," and "the" are intended to include the plural forms as well, unless the context clearly indicates otherwise. Although terms such as "first," "second," and "third" may be used to describe one or more suitable elements, these terms are merely used for distinction and do not imply any particular order or hierarchy. For example, a first element discussed herein could be termed a second element, without departing from the scope of the disclosure. In addition, unless otherwise specially noted, the phrase "A or B," "A and/or B," "A/B" may indicate "A but not B", "B but not A", and "A and B". The terms "comprise(s)/include(s)" and/or "comprising/including" and/or "has(have)/having" used in this disclosure do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the phrase "combination thereof" may refer to a mixture, a stack, a composite, a copolymer, an alloy, a blend, or a reaction product of constituents.

The phrases "A or B," "at least one of A and B," "at least one of A or B," "A, B, or C," "at least one of A, B, and C," "at least one of A, B, or C," "at least one selected from among A, B, and C," and/or the like, include any one or all possible combinations of the listed elements.

Unless otherwise specifically defined, the term "particle diameter" or "particle size" refers to an average particle diameter/size. The particle diameter/size may represent the median particle size (D50), which corresponds to the diameter/size of particles at 50 vol% in a cumulative particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Further, D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. The average particle diameter/size (D50) may be measured using widely suitable methods, such as a particle size analyzer, for example, HORIBA, LA-950 laser particle size analyzer, or by using transmission electron microscope (TEM) imaging, or scanning electron microscope (SEM) imaging. In one or more embodiments, dynamic light scattering may be used, where particle counts within size ranges are analyzed to calculate the average particle diameter/size (D50). In one or more embodiments, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution. In the present disclosure, when particles are spherical, "diameter/size" indicates an average particle diameter/size, and when the particles are non-spherical, the "diameter/size" indicates an average major axis length of particles.

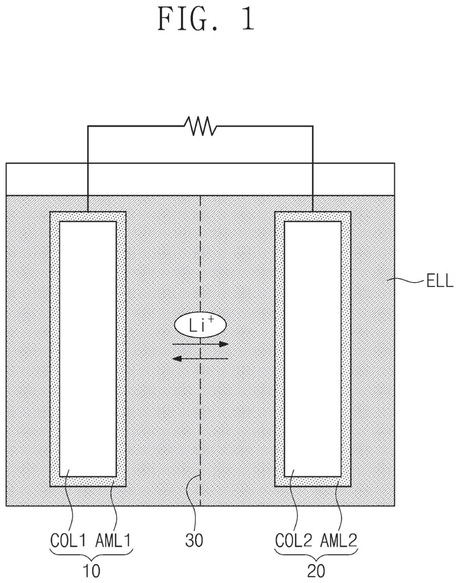

FIG. 1 illustrates a simplified conceptual diagram showing a rechargeable lithium battery according to one or more embodiments of the present disclosure. Referring to FIG. 1, a rechargeable lithium battery includes a positive electrode 10, a negative electrode 20, a separator 30, and may also include an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in the electrolyte ELL.

The electrolyte ELL may be a medium through which lithium ions are transferred/migrated between the positive electrode 10 and the negative electrode 20. In the electrolyte ELL, the lithium ions may move through the separator 30 toward one of the positive electrode 10 and the negative electrode 20.

### Positive Electrode 10

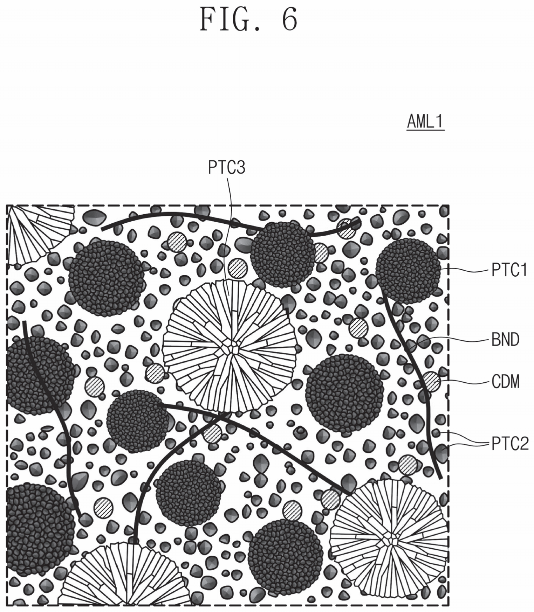

The positive electrode 10 for the rechargeable lithium battery includes a current collector COL1 and a positive electrode active material layer AML1 formed on the current collector COL1. The positive electrode active material layer AML1 includes a positive electrode active material (e.g., in a form of particles), a binder and a conductive material (e.g., an electrically conductive material, e.g., an electron conductor). The positive electrode active material layer AML1 according to one or more embodiments of the present disclosure may be utilized and will be further discussed in more detail with reference to FIG. 6. In one or more embodiments, aluminium (Al) may be used as the current collector COL1, but embodiments of the present disclosure are not limited thereto.

### Negative Electrode 20

The negative electrode 20 for the rechargeable lithium battery may include a current collector COL2 and a negative electrode active material layer AML2 positioned on the current collector COL2. The negative electrode active material layer AML2 may include a negative electrode active material (e.g., in a form of particles), and may further include a binder and/or a conductive material (e.g., an electrically conductive material, e.g., an electron conductor).

For example, in one or more embodiments, the negative electrode active material layer AML2 may include a negative electrode active material of about 90 wt% to about 99.5 wt%, a binder of about 0.5 wt% to about 5 wt%, and a conductive material of about 0 wt% to about 5 wt%, based on a total weight of 100 wt% of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinylpyrrolidone, polyepichlorohydrin, polyphosphazene, poly(meth)acrylonitrile, an ethylene-propylene-diene copolymer, polyvinyl pyridine, chlorosulfonated polyethylene, latex, a polyester resin, a (meth)acrylic resin, a phenolic resin, an epoxy resin, polyvinyl alcohol, or a combination thereof.

When an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, a polyvinylidene fluoride-hexafluoropropylene copolymer, polyethylene oxide, or a combination thereof.

The conductive material ((e.g., electrically conductive material) may be used to provide the negative electrode with conductivity (e.g., electrical conductivity), and any suitable conductive material that does not cause an undesirable chemical change in the battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal-based material in the form of a metal powder or metal fiber including one or more selected from among copper, nickel, aluminium, and silver; a conductive polymer such as a polyphenylene derivative; and/or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material capable of reversibly intercalating/deintercalating lithium ions, lithium metal, a lithium metal alloy, a material capable of doping/de-doping lithium, and/or a transition metal oxide.

The material capable of reversibly intercalating/deintercalating lithium ions may include a carbon-based negative electrode active material, for example, may include crystalline carbon, amorphous carbon, or a combination thereof. For example, the crystalline carbon may include graphite such as non-shaped, sheet-shaped, flake-shaped, sphere-shaped, or fiber-shaped natural and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/de-doping lithium may include a Si-based negative electrode active material and/or a Sn-based negative electrode active material. The Si-based negative electrode active material may include silicon, a silicon-carbon composite, SiOₓ (0 < x ≤ 2), a Si-Q alloy (where Q is an alkali metal, an alkaline earth metal, a Group 13 element, a Group 14 element (except for Si), a Group 15 element, a Group 16 element, a transition metal, a rare-earth element, or a combination thereof), or a combination thereof. The Sn-based negative electrode active material may include Sn, SnOₖ (0<k≤2) (e.g., SnO₂), a Sn-based alloy, or a combination thereof.

The silicon-carbon composite (e.g., in a form of particles) may be a composite of silicon and amorphous carbon. According to one or more embodiments, the silicon-carbon composite may have a structure in which the amorphous carbon is coated on a surface of a silicon particle. For example, in one or more embodiments, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and, for example, the primary silicon particles may each be coated with the amorphous carbon. The secondary particle may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer positioned on a surface of the core.

In one or more embodiments, the Si-based negative electrode active material and/or the Sn-based negative electrode active material may be used in combination with a carbon-based negative electrode active material.

### Separator 30

Based on a type (kind) of the rechargeable lithium battery, the separator 30 may be present between the positive electrode 10 and the negative electrode 20. The separator 30 may include one or more selected from among polyethylene, polypropylene, and polyvinylidene fluoride, for example, may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer positioned on one or two opposite surfaces of the porous substrate, and the coating layer may include an organic material, an inorganic material, or a combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (e.g., Teflon^{™}), or may be a copolymer or a mixture including two or more thereof.

The organic material may include a polyvinylidenefluoride-based copolymer or a (meth)acrylic copolymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a combination thereof, but embodiments of the present disclosure are not limited thereto.

In one or more embodiments, the organic material and the inorganic material may be present mixed in one coating layer or may be present as a stack of a coating layer including an organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of the rechargeable lithium battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1.4-dioxolane; and/or sulfolanes.

The non-aqueous organic solvent may be used alone or in a mixture of two or more thereof.

In addition, if (e.g., when) a carbonate-based solvent is used, a cyclic carbonate and a linear carbonate may be mixed and used, and the cyclic carbonate and the linear carbonate may be mixed in a volume ratio of about 1:1 to about 1:9.

The lithium salt may be a material that is dissolved in the non-aqueous organic solvent to serve as a supply source of lithium ions in the rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are each an integer of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable lithium battery

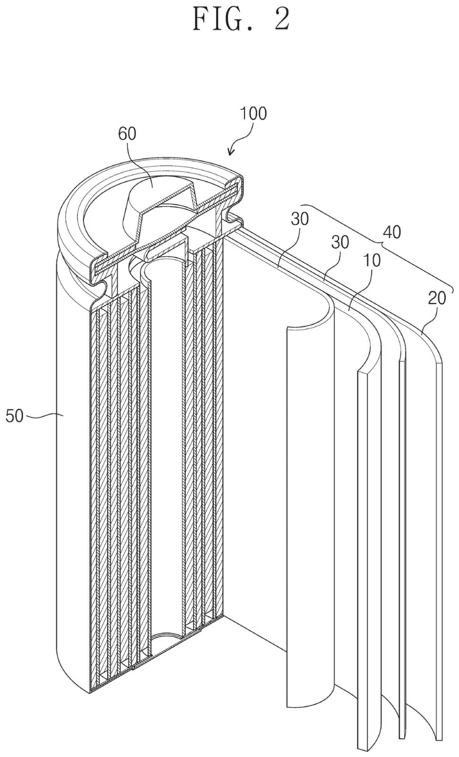

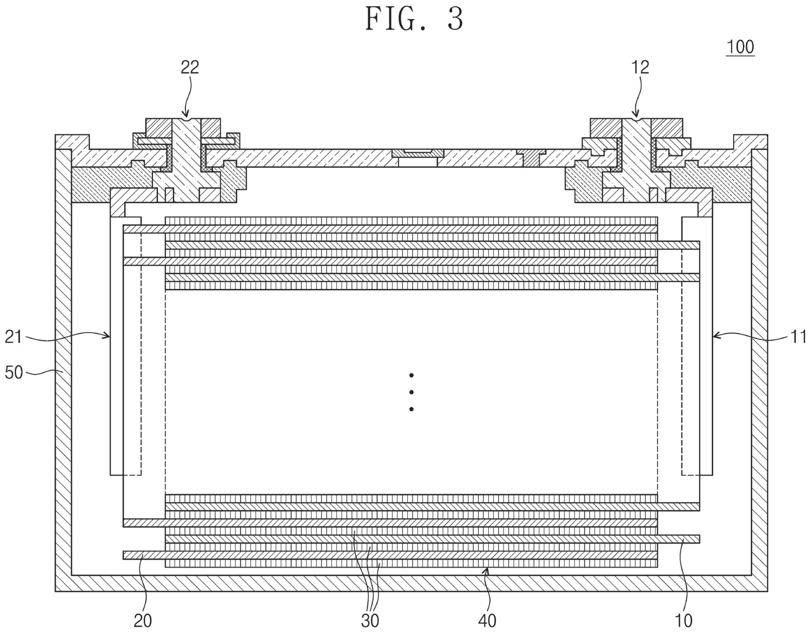

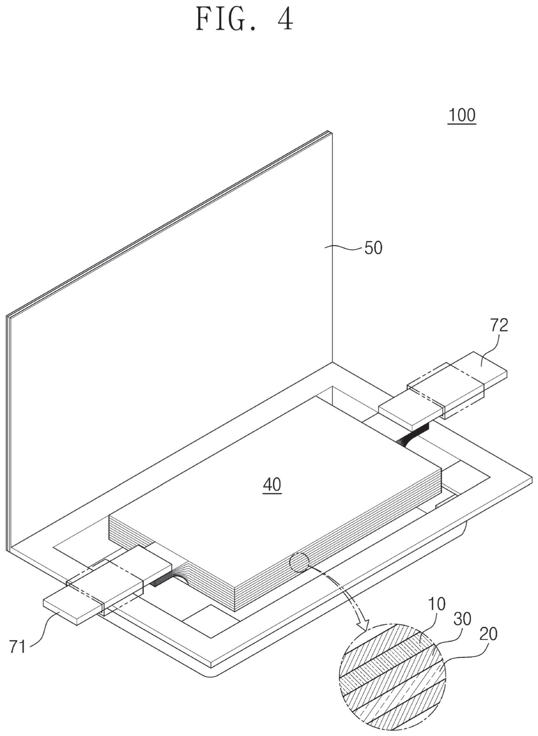

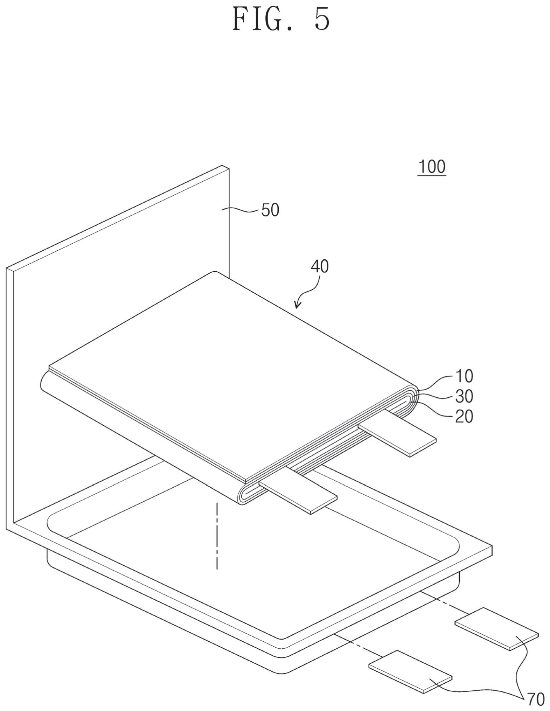

Based on a shape of a rechargeable lithium battery, the rechargeable lithium battery may be classified into a cylindrical, prismatic, pouch, or coin type (kind). FIGS. 2 to 5 each illustrate a simplified diagram showing a rechargeable lithium battery according to one or more embodiments of the present disclosure, with FIG. 2 showing a cylindrical battery, FIG. 3 showing a prismatic battery, and FIGS. 4 and 5 showing pouch-type (kind) batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. In one or more embodiments, the rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. In one or more embodiments, as shown in FIGS. 4 and 5, the rechargeable lithium battery 100 may include an electrode tab 70, or a positive electrode tab 71 and a negative electrode tab 72, serving as an electrical path for externally inducing a current generated in the electrode assembly 40.

The rechargeable lithium battery according to one or more embodiments of the present disclosure may be applied to automotive vehicles, mobile phones, and/or any other electrical devices, but embodiments of the present disclosure are not limited thereto.

FIG. 6 illustrates an enlarged view showing the positive electrode active material layer AML1 of a rechargeable lithium battery according to one or more embodiments of the present disclosure. Referring to FIG. 6, the positive electrode active material layer AML1 includes a first particle PTC1, a second particle PTC2, a third particle PTC3, a conductive material CDM, and a binder BND. A plurality of first particles PTC1, a plurality of second particles PTC2, and a plurality of third particles PTC3 constitute the positive electrode active material according to the present invention.

In one or more embodiments, the positive electrode active material layer AML1 may further include an additive that may serve as a sacrificial positive electrode.

An amount of the positive electrode active material in the positive electrode active material layer AML1 may be in a range of about 90 wt% to about 99 wt% relative to (e.g., based on) a total weight of 100 wt% of the positive electrode active material layer AML1. Amounts of the binder BND and the conductive material CDM may each be about 0.5 wt% to about 5 wt% relative to (e.g., based on) the total weight of 100 wt% of the positive electrode active material layer AML1. For example, in one or more embodiments, the amount of the binder BND is about 0.5 parts by weight to about 5 parts by weight relative to 100 parts by weight of the positive electrode active material layer AML1, and the amount of the conductive material CDM is about 0.5 parts by weight to about 5 parts by weight relative to 100 parts by weight of the positive electrode active material layer AML1.

The binder BND may combine the first particles PTC1, the second particles PTC2, the third particles PTC3, and the conductive material CDM to one another. For example, the binder BND may include at least one selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, an (meth)acrylic resin, a polyester resin, and/or nylon, but embodiments of the present disclosure are not limited thereto.

The conductive material CDM may be used to improve conductivity of the positive electrode active material layer AML1. Any conductive material that does not cause undesirable chemical changes of the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and/or carbon nano-tube; a metal-based material in the form of a metal powder or a metal fiber including one or more selected from among copper, nickel, aluminium, and silver; a conductive polymer such as a polyphenylene derivative; and/or a mixture thereof.

Hereinafter, each of the first particle PTC1, the second particle PTC2, and the third particle PTC3 will be described in more detail.

### First Particle PTC1

The first particle PTC1 may be in a polycrystalline form, and is a secondary particle in which a plurality of first primary particles are aggregated (e.g., agglomerated). One first particle PTC1 includes a plurality of first primary particles aggregated (e.g., agglomerated). The first particle PTC1 has a spherical shape (which also includes an oval shape).

The first particle PTC1 includes an olivine crystal structure lithium compound represented by Chemical Formula 1:

**Chemical Formula 1** Liₐ₁Feₓ₁B1_{y1}PO_{4-b1}

In Chemical Formula 1, 0.8≤a1≤1.2, 0.90≤x1≤0.999, 0.001≤y1≤0.1, 0≤b1≤0.05, and 0.99≤x1+y1≤1.05 (e.g., 0.99≤x1+y1≤1.01), and B1 is at least one element selected from among Ti, Mg, V, Al, Mn, and/or a combination thereof. B1 may be a dopant doped into the first particle PTC1. For example, in one or more embodiments, B1 may include Ti. The dopant may control the size of the first primary particles of the first particle PTC1 to be substantially uniform, thereby improving the charge-discharge efficiency and the lifespan characteristics of the positive electrode active material.

In one or more embodiments, the first particle PTC1 may include a first coating layer on a surface thereof. The first coating layer may cover the entire surface of the first particle PTC1, or may cover a portion of the surface of the first particle PTC1. For example, the first coating layer may include carbon and/or a carbon-containing compound. The structural stability and the electrical conductivity of the first particles PTC1 may be improved by the first coating layer.

In one or more embodiments, the first coating layer may further include at least one metal-containing compound selected from the group consisting of a titanium-containing compound, a magnesium-containing compound, and a vanadium-containing compound. A metal-containing compound such as a titanium-containing compound, a magnesium-containing compound, and a vanadium-containing compound may be, for example, an oxide of respective metal, a hydroxide of respective metal, a carbonate of respective metal, a composite thereof, or a mixture thereof. In one or more embodiments, the metal-containing compound may further include other metal or non-metal element. For example, in one or more embodiments, the metal-containing compound may further include lithium.

In one or more embodiments, the first particle PTC1 may further include a grain boundary coating layer on surfaces of the first primary particles. The grain boundary coating layer may be present inside the first particle PTC1. The grain boundary coating layer may be formed along the interfaces between the first primary particles inside the first particle PTC1. For example, the grain boundary coating layer may refer to a material applied to the grain boundary inside the first particle PTC1. The grain boundary coating layer may include carbon and/or a carbon containing compound. The grain boundary coating layer may further include at least one metal-containing compound selected from the group consisting of a titanium-containing compound, a magnesium-containing compound, and a vanadium-containing compound.

The inside of the first particle PTC1 may refer to an entire inner region of the first particle PTC1 excluding the surface (e.g., outermost surface) of the first particle PTC1. For example, the inside of the first particle PTC1 may refer to an entire inner region from about 10 nanometers (nm) depth from an outer surface of the first particle PTC1 to a center of the first particle PTC1, or a region from about 10 nm depth to about 2 µm depth. For example, in one or more embodiments, this inside region may extend from a depth of about 10 nm below the surface to the center of the first particle PTC1, or from about 10 nm below the surface to a depth of about 2 µm.

By further including a grain boundary coating layer, the first particle PTC1 may achieve enhanced structural stability and a substantially uniform coating layer may be formed on the surface of the first particle PTC1. As a result, the lifespan characteristics of the positive electrode active material may be improved. In addition, if the first particle PTC1 further includes the grain boundary coating layer, the electrical conductivity of the first particle PTC1 may also be further enhanced.

The first particle PTC1 may include carbon derived from the first coating layer and/or the grain boundary coating layer described above. An amount of carbon element in the first particle PTC1 may be about 0.5 wt% to about 10 wt%, about 1 wt% to about 3 wt%, or about 1.5 wt% to about 2.5 wt%, based on a total weight of 100 wt% of the first particle PTC1.

The first particle PTC1 may have an average particle diameter of about 2 µm to about 15 µm, about 3 µm to about 10 µm, or about 3 µm to about 7 µm. For example, the average particle diameter of the first particle PTC1 may be about 5 µm. In one or more embodiments, the average particle diameter may be measured using an electron microscope image. The average particle diameter may refer to an average value calculated by measuring the particle diameters of approximately 30 arbitrarily selected first particles PTC1 from an electron microscope image of the positive electrode active material. In one or more embodiments, the average particle diameter may be measured by a particle size analyzer. The average particle diameter may refer to a diameter (D50) of particles at a cumulative volume of about 50 vol% in a particle size distribution.

The first primary particles of the first particle PTC1 may have an average size of about 10 nm to about 400 nm, about 20 nm to about 300 nm, about 50 nm to about 200 nm, or about 100 nm to about 200 nm. In one or more embodiments, the average size of the first primary particles may refer to an average value of diameters obtained by measuring the diameters of about 30 first primary particles randomly selected from an electron micrograph of a positive electrode active material. The particle diameters of the first primary particles may be substantially uniform.

As described above, the first particle PTC1 has (i.e., is in) a secondary particle form in which the nano-sized first primary particles are densely aggregated (e.g., agglomerated) with each other. With the first primary particles being closely aggregated (e.g., agglomerated) with each other, the first particle PTC1 has a spherical shape (which includes an oval shape), and may have any one or more of the following additional characteristics. An average particle diameter (D50) of the first particle PTC1 may be in a range of about 2 µm to about 15 µm, (e.g., about 3 µm to about 7 µm). A porosity of the first particle PTC1 may in a range of about 20% to about 40%. A span value, obtained by analysis on the first particle PTC1 with a particle size analyzer, may be in a range of about 0.3 to about 0.75.

Porosity as used herein may refer to a ratio of the volume occupied by pores to the total volume in a structure, and % is used as a unit thereof. The term "porosity" may be used interchangeably with terms such as pore ratio, pore volume, or degree of porosity. Porosity may be measured by methods such as the BET (Brunauer-Emmett-Teller) method using nitrogen gas or the mercury intrusion method (Hg porosimetry), but the method for measuring porosity is not limited thereto. The span value is a value that indicates the width of the particle size distribution, or Span = (D90-D10)/D50. A lower span value indicates a more uniform particle size distribution, meaning the particles are more consistent in size. Conversely, a higher span value suggests a wider range of particle sizes within the sample.

The first particle PTC1 includes an olivine-based lithium compound has a stable crystal structure, and may exhibit excellent or suitable lifespan characteristics and high stability. Furthermore, because the first primary particles are aggregated (e.g., agglomerated) into a secondary particle form, improved capacity and lifespan characteristics may be achieved. The first particle PTC1 may exhibit excellent or suitable electrical conductivity and superior low-temperature performance by further including not only a coating layer on the surface of the secondary particle but also a grain boundary coating layer on the surfaces of the first primary particles.

### Second Particle PTC2

The second particle PTC2 is in a single particle form (e.g., in a form of single particle). In this description, the term "single particle" may refer to an individual particle without a grain boundary therein. The single particle may indicate one particle, a monolithic structure, a single unitary structure, or a non-aggregated (e.g., non-agglomerated) particle, where particles are not aggregated (e.g., agglomerated) together with one another but present as an independent phase in terms of morphology. For example, the single particle may be a single crystal. In one or more embodiments, the single particle may be a particle containing several crystals. The single particle may be independently divided. In one or more embodiments, the single particle may have a form in which 2 to 100 independent particles are attached to one another.

The second particle PTC2 may be a nano-type (kind) positive electrode active material. The second particle PTC2 may include at least one second primary particle (in the form of single particle). The second particle PTC2 may be provided in one or more suitable sizes. For example, in one or more embodiments, an average particle diameter of the second particle PTC2 may be about 500 nm to about 2.5 µm, or about 1 µm. A minimum particle diameter of the second particle PTC2, which is the particle size of the second primary particle, may be about 100 nm to about 500 nm, or about 200 nm to about 300 nm.

In one or more embodiments, the average particle diameter may be measured with a particle size analyzer. The average particle diameter may refer to a diameter (D50) of particles at a cumulative volume of about 50 vol% in a particle size distribution. In one or more embodiments, minimum particle diameter of the second particle PTC2 (i.e., the particle size of the second primary particle) may refer to an average value of diameters measured by arbitrarily selecting 30 second primary particles from an electron micrograph of the positive electrode active material.

In one or more embodiments, the second particle PTC2 may include a second coating layer on a surface thereof. The second coating layer may cover the entire surface of the second particle PTC2, or may cover a portion of the surface of the second particle PTC2. For example, the second coating layer may include carbon and/or a carbon-containing compound. In one or more embodiments, the second coating layer may further include at least one metal-containing compound selected from the group consisting of a titanium-containing compound, a magnesium-containing compound, and a vanadium-containing compound. A metal-containing compound such as a titanium-containing compound, a magnesium-containing compound, and a vanadium-containing compound may be, for example, an oxide of respective metal, a hydroxide of respective metal, a carbonate of respective metal, a composite thereof, or a mixture thereof. In one or more embodiments, the metal-containing compound may further include other metal or non-metal element. For example, in one or more embodiments, the metal-containing compound may further include lithium. The second particle PTC2 may have improved structural stability and electrical conductivity due to the second coating layer.

The second particle PTC2 may include carbon derived from the second coating layer described above. An amount of carbon element in the second particle PTC2 may be about 0.5 wt% to about 5 wt%, about 0.5 wt% to about 3 wt%, or about 0.5 wt% to about 2 wt%, based on a total weight of 100 wt% of the second particle PTC2. The amount of carbon in the second particle PTC2 may be less than the amount of carbon in the first particle PTC1. This is because it is difficult for the coating layer to be formed smoothly on the second particle PTC2, which is a single particle, compared with the first particle PTC1 which is a secondary particle.

Similarly to the first particle PTC1, the second particle PTC2 includes an olivine crystal structure lithium compound represented by Chemical Formula 1 described above. The second particle PTC2 may include a lithium compound having a same composition as that of the first particle PTC1, or may include a lithium compound having a different composition from that of the first particle PTC1; nonetheless being represented by Chemical Formula 1.

In one or more embodiments, the second particle PTC2 may include a lithium compound having a same composition as the first particle PTC1, but has a different morphology from that of the first particle PTC1.

### Third Particle PTC3

The third particle PTC3 has a layered crystal structure, and may be a secondary particle in which a plurality of third primary particles are aggregated (e.g., agglomerated). In one or more embodiments, the third particle PTC3 may have a spherical shape or an oval shape in which the third primary particles are aggregated (e.g., agglomerated) with each other. In one or more embodiments, the third particle PTC3 may have a random shape even if the third primary particles are aggregated (e.g., agglomerated). The positive electrode active material according to the present disclosure includes the third particle PTC3, which is a high-nickel-based material, thereby achieving high capacity and high energy density in a rechargeable lithium battery.

The third particle PTC3 includes a lithium nickel-based composite oxide as a nickel-based active material. The third particle PTC3 includes a high-nickel positive electrode active material containing a high content (e.g., amount) (e.g., amount) of nickel. The high-nickel positive electrode active material may provide high capacity and improved cycle characteristics.

The third particle PTC3 includes a lithium nickel-based composite oxide having a layered crystal structure represented by Chemical Formula 2:

**Chemical Formula 2** Liₐ₂Niₓ₂Co_{y2}Ma_{z2}X_{c2}O_{2-b2}

In Chemical Formula 2, 0.8≤a2≤1.2, 0.8≤x2<1.0, 0<y2≤0.1, 0<z2≤0.1 0≤c2≤0.05, 0≤b2≤0.05, and 0.9≤x2+y2+z2+c2≤1.1, Ma is at least one element selected from among Al, Mn and/or a combination thereof, and X is at least one element selected from among Ti, Mg, Zr, Al, and/or a combination thereof. X may be a dopant doped into the third particle PTC3.

In one or more embodiments, the third particle PTC3 may include a third coating layer on a surface thereof. By including the third coating layer, the third particle PTC3 may effectively suppress or reduce structural collapse caused by repeated charging and discharging. As a result, the lifespan characteristics of the rechargeable lithium battery may be improved.

The third coating layer may include a boron-containing compound, an aluminium-containing compound, or a combination thereof. A metal-containing compound such as a boron-containing compound and an aluminium-containing compound in the third coating layer may be, for example, an oxide of respective metal, a hydroxide of respective metal, a carbonate of respective metal, a composite thereof, or a mixture thereof. In one or more embodiments, the metal-containing compound may further include other metal or non-metal element. For example, in one or more embodiments, the third coating layer may further include lithium, manganese, and/or nickel.

A method of measuring an amount of metal in a coating layer (e.g., the coating layer of any of the first particle PTC1, the second particle PTC2, the third particle PTC3, or of a grain boundary coating layer) may include performing scanning electron microscope-energy dispersive X-ray spectroscopy (SEM-EDS) on the subject coated particle (e.g., the coated third particle PTC3). The analysis may determine an amount of metal(s) (e.g., boron and/or aluminium) in the coating layer. The amount of metal included in the coating layer may be analyzed by using inductively coupled plasma-mass spectrometry (ICP-MS) or inductively coupled plasma optical emission spectroscopy (ICP-OES), in addition to scanning electron microscope-energy dispersive X-ray spectroscopy (SEM-EDS).

An average particle diameter of the third particle PTC3 may be about 8 µm to about 20 µm, about 10 µm to about 20 µm, or about 12 µm to about 18 µm. The average particle diameter of the third particle PTC3 may be larger than that of each of the first particle PTC1 and the second particle PTC2 described above. The size of the third primary particles of the third particle PTC3 may be larger than that of the first primary particles of the first particle PTC1 and that of the second primary particles of the second particle PTC2.

In one or more embodiments, the average particle diameter may be measured using an electron microscope image. The average particle diameter may refer to an average value calculated by measuring the particle diameters of approximately 30 arbitrarily selected third particles PTC3 from an electron microscope image of the positive electrode active material. In one or more embodiments, the average particle diameter may be measured by a particle size analyzer. The average particle diameter may refer to a diameter (D50) of particles at a cumulative volume of about 50 vol% in a particle size distribution.

In one or more embodiments of the present disclosure, the third particle PTC3 may be in the form of a single particle. The description of the single particle may be the same as or similar to that described in the second particle PTC2 above. In one or more embodiments, the third particle PTC3 may have a form composed of one single particle. In one or more embodiments, the third particle PTC3 may have a form in which a plurality of single particles is attached to each other.

In one or more embodiments of the present disclosure, the third particle PTC3 may be present in a mixed form that includes both (e.g., simultaneously) secondary particles and single particles. For example, in such a mixed form, some of the third particles are secondary particles and others are single particles, coexisting within the same material, and they coexist within the same positive electrode active material.

The positive electrode active material according to one or more embodiments of the present disclosure will be described in more detail with reference to FIG. 6 again. The positive electrode active material of the present disclosure includes the first particle PTC1, the second particle PTC2, and the third particle PTC3.

According to one or more embodiments of the present disclosure, the sum of an amount of the first particle PTC1 and an amount of the second particle PTC2 may be about 70 wt% or more, or about 80 wt% or more, up to about 95 wt%, based on a total weight of 100 wt% of the positive electrode active material. An amount of the third particle PTC3 may be about 30 wt% or less, or about 20 wt% or less, down to about 5 wt%, based on the total weight of 100 wt% of the positive electrode active material. For example, in one or more embodiments, the sum of the amount of the first particle PTC1 and the amount of the second particle PTC2 may be about 85 wt% and the amount of the third particle PTC3 may be about 15 wt% based on the total weight of 100 wt% of the positive electrode active material.

As described above, the first particle PTC1 and the second particle PTC2 may be used as main components which account for about 70 wt% or more of the total weight of the positive electrode active material. The first particle PTC1 and the second particle PTC2 are each an olivine-based active material that is structurally stable. When the structurally stable first particle PTC1 and second particle PTC2 are used as main components of the positive electrode active material, a positive electrode having excellent or suitable lifespan characteristics and stability may be obtained.

The first particle PTC1 and the second particle PTC2, which may constitute the main components of the positive electrode active material, may have a set or predetermined mixing ratio. For example, a mixing ratio of the first particles to the second particles may in a range of about 3:1 to about 1:3, about 2:1 to about 1:2, or about 1.5:1 to about 1:1.5 by weight.

The first particle PTC1, which is in the form of a spherical secondary particle, has superior capacity and lifespan compared to the second particle PTC2, which is in the form of a single particle. However, if (e.g., when) the positive electrode is fabricated using only the first particle PTC1, there may be a problem of reduced pellet density and energy density of the positive electrode. If (e.g., when) the first particle PTC1 and the second particle PTC2 are mixed at the above-described weight ratio, an olivine-based positive electrode active material with improved density, as well as excellent or suitable lifespan and capacity, may be obtained.

The amount of the third particle PTC3 may be about 30 wt% or less based on the total weight of 100 wt% of the positive electrode active material. For example, in one or more embodiments, the amount of the third particle PTC3 may be in a range of about 5 wt% to about 30 wt%, about 10 wt% to about 20 wt%, or about 10 wt% to about 15 wt% based on the total weight of 100 wt% of the positive electrode active material.

If (e.g., when) the amount of the third particle PTC3, which is a high-nickel positive electrode active material, is too small, the improvement in capacity and density of the rechargeable lithium battery may be insignificant. If (e.g., when) the amount of the third particle PTC3 in the positive electrode active material is too large, the high-temperature stability and lifespan characteristics of the positive electrode may be degraded. When the amount of the third particle PTC3 satisfies the above-described range, it may achieve high capacity and high energy density while obtaining a positive electrode active material with excellent or suitable lifespan and high-temperature stability.

### Manufacture of Positive Electrode Active Material

### Manufacture of First Particle PTC1

A method for manufacturing the first particle PTC1 according to one or more embodiments of the present disclosure will be described in more detail.

An iron phosphate precursor, a lithium source, a carbon source, and a dopant source may be added to a solvent, and mixed. For example, the solvent may be water, ethanol, and/or the like. The iron phosphate precursor may be a compound containing both (e.g., simultaneously) iron (Fe) and phosphorus (P), or a mixture of an iron (Fe)-containing compound and a phosphorus (P)-containing compound. For example, the iron phosphate precursor may be a mixture of FePO₄·H₂O, FeSO₄, and H₃PO₄, or a mixture of (NH₄)₂Fe(SO₄)₂·6H₂O and H₃PO₄.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The positive electrode active material according to embodiments of the present disclosure may include first to third particles and may exhibit high pellet density. The pellet density of the positive electrode active material according to embodiments of the present disclosure may be greater than about 2.5 g/cc. For example the pellet density of the positive electrode active material may be about 2.5 g/cc to about 2.9 g/cc.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from the group consisting of titanium oxide, magnesium oxide, vanadium oxide, aluminum oxide, and manganese oxide.

Wet grinding may be performed on the mixture. For the wet grinding, a general wet mill capable of temperature control may be used. In one or more embodiments, at least one selected from among a beads mill, a ball mill, an attrition mill, an apex mill, a super mill, and a basket mill may be used for the wet grinding. Through the wet grinding process, particles in the mixture may be ground to a fine size.

In one or more embodiments of the disclosure, the wet grinding may not be provided or performed. The wet grinding of the precursor may not be provided in order to maximize or increase the average particle diameter of the finally produced first particle PTC1.

The solvent may be then removed from the mixture to form a dried mixture. In one or more embodiments of the disclosure, forming the dried mixture may include performing spray-drying on the mixture. A generally used spray-drying device may be used for the spray-drying. For example, in one or more embodiments, the spray-drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet grinding process, may be aggregated (e.g., agglomerated) with each other through the spray-drying process to thereby form secondary particles. Therefore, by adjusting the flow amount and flow rate of a carrier gas, temperature, the residence time in a reactor, internal pressure, and/or the like during the spray-drying process, the first particle PTC1 may be formed as secondary particles with a desired or suitable shape and size.

In one or more embodiments, the mixture to be spray-dried may have a total solid content (e.g., amount) (TSC) of about 20 wt% to about 40 wt% based on a total weight of the mixture to be spray-dried. The total solid content (e.g., amount) may refer to a converted value to percentage of the weight of a solid material remaining after solvent evaporation (that is, dried mixture) with respect to the total weight of the mixture (that is, spray liquid). For example, in certain embodiments, the spray liquid may have a total solid content (e.g., amount) of about 30 wt% based on the total weight of the spray liquid.

If (e.g., when) the total solid content (e.g., amount) is less than about 20 wt%, there are disadvantages in that an average particle diameter of the first particle PTC1 decreases, and productivity is reduced. If (e.g., when) the total solid content (e.g., amount) is greater than about 40 wt%, adjusting the average particle diameter of the first particles PTC1 may become difficult, and size difference between the first particles PTC1 may increase.

The spray liquid according to one or more embodiments of the present disclosure may have a viscosity of about 1500 mPa·s to about 2500 mPa·s with the above-mentioned total solid content (e.g., amount). For example, in one or more embodiments, the spray liquid may have a viscosity of about 2000 mPa·s.

The spray liquid for the spray-drying may have a flow rate of about 30 mL /min to about 80 mL /min. If (e.g., when) the flow rate is less than about 30 mL /min, there are disadvantages of nozzle clogging, reduced productivity, and/or the like. If (e.g., when) the flow rate is greater than about 80 mL /min, due to moisture condensation in the spray-drying device, the mixture may not be dried completely.

In one or more embodiments, a feed rate for spray-drying may be from 0.1 kg/min to 0.9 kg/min. The feed rate for spray-drying may be defined as the weight of the solvent and raw material mixture fed per unit time. In one or more embodiments, the feed rate for spray-drying according to the present disclosure may be about 0.5 kg/min.

In one or more embodiments, the spray-drying may be performed at a temperature of about 100 °C to about 300 °C. Spray gas (for example, air), used for the spray-drying, may be injected at a first temperature, and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, in one or more embodiments, the input pressure of the spray liquid may be about 0.5 MPa.

When the flow rate, feed rate, input pressure, and temperature of the spray-drying process satisfy the above-described ranges, the first particle PTC1 may have a spherical shape and a desired or suitable porosity.

The dried mixture may then be calcined under an inert atmosphere. The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 containing the compound represented by Chemical Formula 1, previously described, may be formed.

A dry grinding process may then be performed on the calcined first particle PTC1. The calcined mixture may be ground using an air jet mill and/or the like. The calcined mixture may be ground at a rotational speed of about 0 rpm to about 7000 rpm. For example, in one or more embodiments, the calcined mixture may be ground at a rotational speed of about 4000 rpm to about 7000 rpm, about 4000 rpm to about 6000 rpm, or about 4500 rpm to about 5000 rpm. In one or more embodiments, dry grinding may not be provided or performed.

When the rotational speed of the grinding step (e.g., act or task) satisfies the above-described range, the first particle PTC1 may be maintained in the form of secondary particle. The first particle PTC1 may thus have a secondary particle form, as shown in FIG. 6.

### Manufacture of Second Particle PTC2

A method for manufacturing the second particle PTC2 according to one or more embodiments of the present disclosure will be described in more detail hereinafter. First, an iron phosphate precursor, a lithium source, a carbon source, and a dopant source may be added to a solvent and mixed.

For example, the solvent may be water, ethanol, and/or the like. The iron phosphate precursor, the lithium source, the carbon source, and the dopant source may be substantially the same as or similar to those used in the preparation of the first particle PTC1 previously described.

Wet grinding may be performed on the mixture. The wet grinding process may be substantially the same as or similar to that in the preparation of the first particle PTC1 previously described.

The solvent may then be removed from the mixture to form a dried mixture. The forming of the dried mixture may include performing direct evaporation on the mixture. For example, the direct evaporation may include static drying or spray-drying. To form the second particle PTC2 into a single particle, the static drying may be utilized.

The dried mixture may then be calcined in an inert atmosphere. The conditions of the calcination process may be substantially the same as or similar to those of the second calcination process of the first particle PTC1 previously described. As the dried mixture is calcined, the second particle PTC2 containing the compound represented by Chemical Formula 1, previously described, may be formed.

Dry grinding may be performed on the calcined second particle PTC2. Accordingly, the second particle PTC2 may have a single particle form. as shown in FIG. 6.

### Manufacture of Third Particle PTC3

A method for manufacturing the third particle PTC3 according to one or more embodiments of the present disclosure will be described in more detail hereinafter. First, a high-nickel precursor may be prepared. The high-nickel precursor includes the Ni, Co and Al and/or Mn of Chemical Formula 2 described above. The amount of Ni relative to the total amount of metals in the high-nickel precursor may be greater than about 75 at%, about 79 at% or about 80 at %. In one or more embodiments, the high-nickel precursor may include both of Al and Mn in combination.

In one or more embodiments, the high-nickel precursor may be obtained by a co-precipitation method. For example, the co-precipitation method may include dissolving a transition metal raw material in a solvent such as distilled water, and continuously adding a solution of a transition metal salt (e.g., transition metal raw material) together with a chelating agent and an alkaline aqueous solution to a reactor to cause precipitation. After collecting the precipitate in a slurry type (kind) or kind, the slurry solution may be filtered and dried to obtain a high nickel-based precursor that is a metal composite oxide/hydroxide.

In the present disclosure, the transition metal raw material may include a metal salt of Ni, a metal salt of Co and a metal salt of Al and/or Mn. In one or more embodiments, the transition metal raw material may include a metal salt of both Al and Mn. Each metal salt may include a sulfate, a nitrate, an acetate, a halide, a hydroxide, and/and/or the like, and any one may be used as long as it is dissolved in a solvent without limitation. The transition metal raw material according to the present embodiments includes a nickel salt, a cobalt salt, and an aluminium salt and/or a manganese salt. The transition metal raw material may be blended by adjusting the molar ratio so that the high-nickel precursor has the Ni content (e.g., amount) of about 80 at% or more based on the total metal of 100 at% of the high-nickel precursor.

The high-nickel precursor and a lithium source may then be mixed in a certain ratio to form a mixture. For example, in one or more embodiments, the high-nickel precursor and the lithium source may be mixed in a molar ratio of about 1:1. The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

By removing the solvent from the mixture, a dried mixture may be formed. The dried mixture may then undergo calcination. A temperature of the calcination process may be about 700 °C to about 1000 °C, or about 900 °C to about 1000 °C. The calcination process may be performed under an oxidizing atmosphere such as air and/or oxygen. The execution time of the calcination process may be about 10 hours to about 30 hours. In one or more embodiments of the present disclosure, a preliminary calcination may be further performed at about 150 °C to about 800 °C prior to the calcination process.

Through the calcination process, the third particle including a compound represented by Chemical Formula 2 described above may be formed. The synthesized third particle PTC3 may be further subjected to a grinding process.

The ground third particle PTC3 may be subjected to a coating process. For example, the third particle PTC3 and a coating raw material may be added to a solvent and mixed. For example, the coating raw material may include boron and/or aluminium. After filtering and drying the third particle PTC3, a surface treatment may be performed on the third particle PTC3. The surface treatment may include a heating process under an oxidizing atmosphere such as air and/or oxygen. The surface treatment may be performed at a temperature of about 500 °C to about 800 °C.

In one or more embodiments of the disclosure, the coating process may include a dry coating process. For example, the third particle PTC3 and the coating raw material may be put in a dry coating device and mixed by stirring without a solvent. The surface treatment may be performed with respect to the dried mixture obtained.

In one or more embodiments of the disclosure, the coating process may not be provided or performed.

### Mixing of First (PTC1), Second (PTC2) and Third Particles (PTC3)

By mixing the first, second, and third particles PTC1, PTC2, PTC3, which are respectively prepared by the above-described methods, the positive electrode active material according to the present disclosure may be prepared. The amount of the third particle PTC3 may be about 30 wt% or less, or about 20 wt% or less, based on the total weight of 100 wt% of the positive electrode active material. The amount of the third particle PTC3 may be about 5 wt% to about 30 wt%, about 10 wt% to about 30 wt%, about 10 wt% to about 20 wt%, or about 10 wt% to about 15wt%, based on the total weight of 100 wt% of the positive electrode active material.

The sum of the amount of the first particle PTC1 and the amount of the second particle PTC2 may be about 70 wt% or more, or about 80 wt% or more, based on the total weight of 100 wt% of the positive electrode active material. in one or more embodiments, the sum of the amount of the first particle PTC1 and the amount of the second particle PTC2 may be about 70 wt% to about 95 wt%, about 70 wt% to about 90 wt%, about 80 wt% to about 90 wt%, or about 75 wt% to about 90 wt%, based on the total weight of 100 wt% of the positive electrode active material. The mixing ratio of the first particle PTC1 to the second particle PTC2 may in a range of about 3:1 to about 1:3, about 2:1 to about 1:2, or about 1.5:1 to about 1:1.5 by weight.

Carbon element analysis according to one or more embodiments of the present disclosure may be performed by an Elementar Micro Cube elemental analyzer. Particular operation method and conditions are as follows. About 1-2 mg of a sample is weighed in a tin cup, put in an automatic sampling tray, brought into a combustion tube via a ball valve, and burned at a combustion temperature of about 1000 °C. After that, the burned gas is reduced using reducing copper to form carbon dioxide. The carbon dioxide is detected using a thermal conductivity detector (TCD) detector.

In the method for measuring the carbon content (e.g., amount) according to one or more embodiments of the present disclosure, scanning electron microscopy-energy dispersive X-ray spectroscopy (SEM-EDS) is performed with respect to the surface of the particles, and quantitative analysis is performed. As the method for measuring the carbon content (e.g., amount), an inductively coupled plasma-mass spectrometry (ICP-MS), an inductively coupled plasma optical emission spectroscopy (ICP-OES), and/and/or the like may be used in addition to the SEM-EDS.

Hereinafter, the Examples and Comparative Examples will be described. However, the Examples are only illustrations of the present disclosure, and disclosure is not limited to the Examples.

### Preparation Example 1: Manufacture of First Particle (PTC1) in the Form of Secondary Particle

An iron phosphate precursor (FePO₄), lithium carbonate, and titanium dioxide were mixed so that the molar ratio of Fe:Li:Ti was about 1:1.03:0.03. 10 wt% of glucose, with respect to the total weight of the mixture, was further added to the mixture. Wet grinding was performed on the mixture by ball milling. The slurry mixture was dried over evaporation, through spray-drying, under conditions of a spray pressure of about 0.5 MPa and a temperature of about 230 °C. The dried mixture was calcined in a nitrogen atmosphere at about 750 °C for about 10 hours to obtain a first particle (PTC1) in the form of a secondary particle. The average size of the first particle was about 5 µm, and the average size of primary particles in the first particle was about 100 nm to about 200 nm.

### Preparation Example 2: Manufacture of Second Particle (PTC2) in the Form of Single Particle

An iron phosphate precursor (FePO₄), lithium carbonate, and titanium dioxide were mixed so that the molar ratio of Fe:Li:Ti was about 1:1.03:0.03. 10 wt% of glucose, with respect to the total weight of the mixture, was further added to the mixture. Wet grinding was performed on the mixture by ball milling. The mixture was dried over evaporation on a tray by heating, and then dried in a vacuum oven at about 120 °C for about 4 hours. The dried mixture was calcined in a nitrogen atmosphere at about 750 °C for about 10 hours. The calcined product was ground to obtain a second particle (PTC2) in the form of a single particle. The average size of the second particle was about 1 µm.

### Preparation Example 3: Manufacture of Third Particle (PTC3) in the Form of Secondary Particle

A high-nickel precursor was prepared using a co-precipitation method. Hydrated nickel sulfate (NiSO₄·6H₂O), hydrated cobalt sulfate (CoSO₄·7H₂O), and hydrated aluminium sulfate (Al₂(SO₄)₃·18H₂O) were mixed in distilled water as a solvent so that the molar ratio of Ni:Co:Al was 90:7:3, thereby preparing a metal raw material mixture solution. A diluted aqueous solution of ammonia (NH₄OH) and sodium hydroxide (NaOH) as a precipitating agent were prepared. Subsequently, the metal raw material mixture solution, and diluted aqueous solution of ammonia (NH₄OH) and sodium hydroxide (NaOH) were introduced into a reactor. Sodium hydroxide was added to maintain the pH of the mixture in the reactor. The mixture in the reactor was stirred and reacted for approximately 20 hours. The slurry in the reactor was filtered and washed with high-purity distilled water. The washed material was dried in a hot air oven at 190 °C for 24 hours to obtain a high-nickel precursor powder of Ni_{0.90}Co_{0.07}Al_{0.03}(OH)₂ having a particle size of approximately 18 µm.

The high-nickel precursor and anhydrous lithium hydroxide (LiOH) were dry mixed using a Henschel mixer. The mixing was performed so that the molar ratio of lithium to a transition metal was about 1:1. The transition metal is the total sum of transition metals contained in the high-nickel precursor (Ni + Co + Al). The mixture was calcined at approximately 900 °C for 10 hours in an oxygen atmosphere to synthesize the third particle. The third particle was ground using a jet mill at a pressure of 3 bar. The average particle diameter of the resulting third particle (PTC3) was approximately 15 µm.

### Example 1

### (Manufacture of Positive Electrode Active Material)

The first particle (PTC1) of Preparation Example 1, the second particle (PTC2) of Preparation Example 2, and the third particle (PTC3) of Preparation Example 3 were mixed at a weight ratio of 40:45:15 to prepare a positive electrode active material.

### (Manufacture of Rechargeable Lithium Battery)

95 wt% of a final positive electrode active material, 3 wt% of a polyvinylidene fluoride binder, and 2 wt% of a carbon black conductive material were mixed in an N-methyl pyrrolidone solvent to prepare a positive electrode active material slurry. The positive electrode active material slurry was applied on an aluminium current collector, dried and rolled to manufacture a positive electrode.

A 2032-type (kind) coin half-cell was fabricated using the prepared positive electrode and a lithium metal counter electrode. A porous polyethylene (PE) film separator (thickness: approximately 16 µm) was interposed between the positive electrode and the lithium metal counter electrode, and an electrolyte was injected to assemble the rechargeable lithium battery. As the electrolyte, a solution of 1.3 M LiPF₆ in a mixed solvent of ethylene carbonate (EC), ethyl methyl carbonate (EMC), and dimethyl carbonate (DMC) in a volume ratio of 3:4:3 was used.

### Example 2

Except that the first particle (PTC1), the second particle (PTC2), and the third particle (PTC3) were mixed at a weight ratio of 42.5:42.5:15 in the preparation of the positive electrode active material, the positive electrode active material and the rechargeable lithium battery were prepared in substantially the same manner as in Example 1.

### Example 3

Except that the first particle (PTC1), the second particle (PTC2), and the third particle (PTC3) were mixed at a weight ratio of 45:40:15 in the preparation of the positive electrode active material, the positive electrode active material and the rechargeable lithium battery were prepared in substantially the same manner as in Example 1.

### Example 4

Except that the first particle (PTC1), the second particle (PTC2), and the third particle (PTC3) were mixed at a weight ratio of 60:25:15 in the preparation of the positive electrode active material, the positive electrode active material and the rechargeable lithium battery were prepared in substantially the same manner as in Example 1.

### Example 5

Except that the first particle (PTC1), the second particle (PTC2), and the third particle (PTC3) were mixed at a weight ratio of 70:15:15 in the preparation of the positive electrode active material, the positive electrode active material and the rechargeable lithium battery were prepared in substantially the same manner as in Example 1.

### Example 6

Except that the first particle (PTC1), the second particle (PTC2), and the third particle (PTC3) were mixed at a weight ratio of 37.5:37.5:25 in the preparation of the positive electrode active material, the positive electrode active material and the rechargeable lithium battery were prepared in substantially the same manner as in Example 1.

### Example 7

Except that the first particle (PTC1), the second particle (PTC2), and the third particle (PTC3) were mixed at a weight ratio of 35:35:30 in the preparation of the positive electrode active material, the positive electrode active material and the rechargeable lithium battery were prepared in substantially the same manner as in Example 1.

### Comparative Example 1

Except that only the first particle (PTC1) prepared in Preparation Example 1 was used as the positive electrode active material, the positive electrode active material and the rechargeable lithium battery were prepared in substantially the same manner as in Example 1.

### Comparative Example 2

Except that only the second particle (PTC2) prepared in Preparation Example 2 was used as the positive electrode active material, the positive electrode active material and the rechargeable lithium battery were prepared in substantially the same manner as in Example 1.

### Comparative Example 3

Except that the second particle (PTC2) was omitted and the first particle (PTC1) and the third particle (PTC3) were mixed at a weight ratio of 85:15 during the preparation of the positive electrode active material, the positive electrode active material and the rechargeable lithium battery were prepared in substantially the same manner as in Example 1.

### Comparative Example 4

Except that the first particle (PTC1) was omitted and the second particle (PTC2) and the third particle (PTC3) were mixed at a weight ratio of 85:15 during the preparation of the positive electrode active material, the positive electrode active material and the rechargeable lithium battery were prepared in substantially the same manner as in Example 1.

### Evaluation Example 1: Analysis of the Surface of Positive Electrode Active

### Material

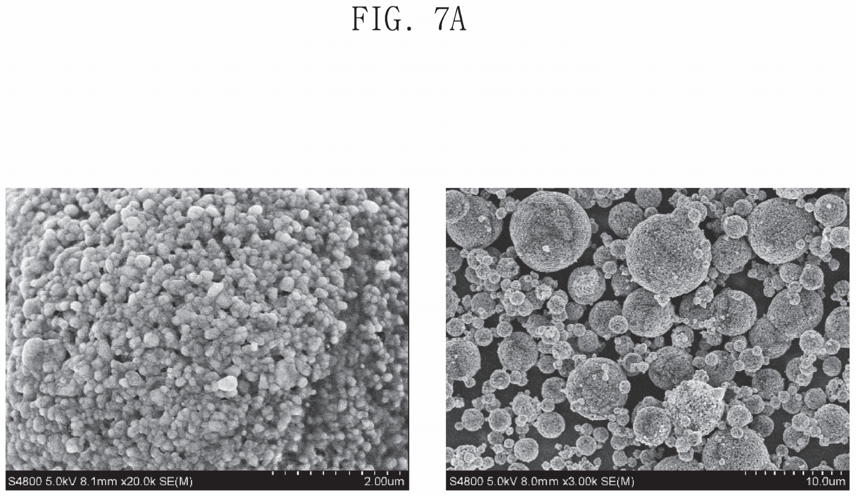

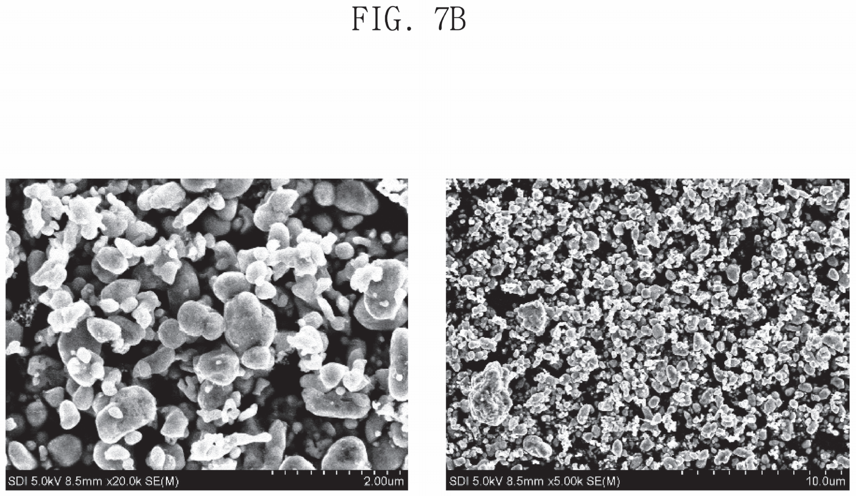

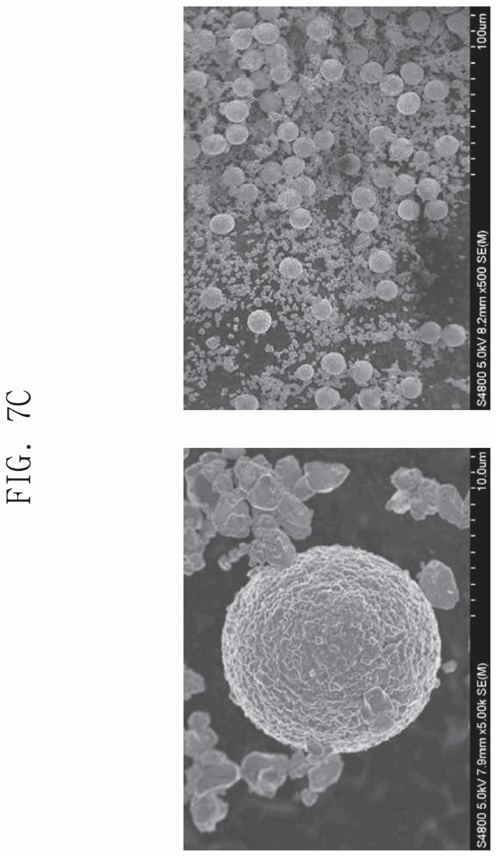

Two scanning electron microscope (SEM) images of the first particle (PTC1) manufactured in Preparation Example 1 are shown in FIG. 7A. Two scanning electron microscope (SEM) images of the second particle (PTC2) manufactured in Preparation Example 2 are shown in FIG. 7B. Two scanning electron microscope (SEM) images of the third particle (PTC3) manufactured in Preparation Example 3 are shown in FIG. 7C.

Referring to FIG. 7A, it can be observed that the first particle (PTC1) manufactured in Preparation Example 1 is in the form of a spherical secondary particle, in which a plurality of primary particles is aggregated (e.g., agglomerated) with each other. Referring to FIG. 7B, it can be observed that the second particle (PTC2) manufactured in Preparation Example 2 is in the form of single particles with nano size. Referring to FIG. 7C, it can be observed that the third particle (PTC3) manufactured in Preparation Example 3 is in the form of a spherical secondary particle in which a plurality of primary particles is aggregated (e.g., agglomerated) with each other.

### Evaluation Example 2: Evaluation of Positive Electrode Active Material

The average compressive density (Pellet Density, PD) of each of the positive electrode active materials manufactured according to the Examples and Comparative Examples was determined, and the results are shown in Table 1. The average compressive density was obtained by placing 1 g of the positive electrode active material into a pellet-forming mold, applying a force of 4 tons for 30 seconds, and calculating the density based on the thickness of the resulting pellet and the diameter of the mold.

**Table 1**

| | Mixing Ratio (wt%) | | | Pellet Density (g/cc) |
|---|---|---|---|---|
| | First Particle (PTC1) | Second Particle (PTC2) | Third Particle (PTC3) | |
| Example 1 | 40 | 45 | 15 | 2.59 |
| Example 2 | 42.5 | 42.5 | 15 | 2.66 |
| Example 3 | 45 | 40 | 15 | 2.56 |
| Example 4 | 60 | 25 | 15 | 2.52 |
| Example 5 | 70 | 15 | 15 | 2.49 |
| Example 6 | 37.5 | 37.5 | 25 | 2.79 |
| Example 7 | 35 | 35 | 30 | 2.85 |
| Comparative Example 1 | 100 | 0 | 0 | 2.20 |
| Comparative Example 2 | 0 | 100 | 0 | 2.47 |
| Comparative Example 3 | 85 | 0 | 15 | 2.42 |
| Comparative Example 4 | 0 | 85 | 15 | 2.57 |

Referring to Table 1, it can be observed that the positive electrode active materials according to the Examples generally have a higher pellet density than those of the positive electrode active materials according to Comparative Examples 1 to 3.

### Evaluation Example 3: Evaluation of Rechargeable Lithium Battery

The characteristics of each of the rechargeable lithium batteries manufactured according to the Examples and Comparative Examples were evaluated.

### Evaluation of Initial Capacity and Average Voltage

The rechargeable lithium battery as prepared was charged at 25 °C with a constant current at a 0.2C rate until the voltage reached 3.8 V (vs. Li), followed by a constant voltage mode at 3.8 V until the current dropped to a 0.05C rate (cut-off). Subsequently, the battery was discharged with a constant current at a 0.2C rate until the voltage reached 2.5 V (vs. Li) (formation cycle). The charge and discharge capacities and average voltage during the formation cycle were measured and are shown in Table 2.

The average voltage was obtained by integrating an area under a discharge voltage curve (a-voltage-capacity graph) after the formation cycle of the cells and then dividing the integral by discharge capacity.

### Evaluation of Energy Density

The cell energy density was evaluated according to the following calculation and is shown in Table 2.

Cell volume measurement (unit, L) = width (mm) × length (mm) × thickness (mm)

Cell energy measurement (unit, Wh) = cell capacity (Ah) × average voltage (V)

Energy density measurement (unit, Wh/L) = cell energy (Wh) / cell volume (L)

**Table 2**

| | 0.2C Charge Capacity (mAh/g) | 0.2C Discharge Capacity (mAh/g) | Average Voltage (V) | Energy Density (Wh/L) |
|---|---|---|---|---|
| Example 1 | 175.1 | 168.0 | 3.28 | 1427 |
| Example 2 | 175.0 | 168.0 | 3.28 | 1466 |
| Example 3 | 174.0 | 165.1 | 3.28 | 1386 |
| Example 4 | 174.3 | 165.8 | 3.28 | 1370 |
| Example 5 | 174.8 | 167.4 | 3.28 | 1367 |
| Example 6 | 182.5 | 173.3 | 3.33 | 1610 |
| Example 7 | 186.3 | 176.0 | 3.38 | 1695 |
| Comp. Example 1 | 161.9 | 157.3 | 3.20 | 1107 |
| Comp. Example 2 | 158.9 | 155.1 | 3.20 | 1226 |
| Comp. Example 3 | 173.4 | 165.5 | 3.29 | 1318 |
| Comp. Example 4 | 172.3 | 163.8 | 3.29 | 1370 |

Referring to Table 2, it can be observed that the rechargeable lithium batteries according to the Examples have better 0.2C charge and discharge capacities and have approximately equivalent or higher average voltages, and at least equivalent or higher energy densities, when compared with the lithium secondary batteries of Comparative Examples1 to 4.

Meanwhile, although Comparative Example 4 exhibits an energy density comparable to those of Examples 4 and 5, it was confirmed that Examples 4 and 5 show a superior high-temperature capacity retention ratio (the ratio of the discharge capacity after storage at 60 °C for 30 days to the discharge capacity before high-temperature storage).

The positive electrode active material according to the present invention may exhibit improved mixture density, capacity, and energy density by incorporating a blend of two (or more) olivine-based lithium compounds with different particles sizes and a high-nickel lithium compound having a layered crystal structure. For example, the combination of a first particle in the form of a spherical secondary particle, a second particle in the form of a nano-sized single particle, and a third particle comprising a high-nickel layered structure enables a synergistic enhancement in both structural and electrochemical properties. This multi-component design contributes to improved packing efficiency, lithium-ion transport, and electrical conductivity within the electrode. Accordingly, the rechargeable lithium battery of the present disclosure may exhibit a relatively high average voltage and excellent or suitable cycle life.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described with reference to example embodiments, it should be understood that these embodiments are provided for illustrative purposes only and do not limit the scope of the present disclosure. Various modifications and equivalent arrangements may be made without departing from the scope of the appended claims and equivalents thereof. Accordingly, the described embodiments should be regarded as examples rather than limitations of the present disclosure. It is further understood that the scope of the present disclosure is defined by the appended claims and equivalents thereof rather than the detailed description described above, and all modifications and alterations derived from the claims and their equivalents fall within the scope of the present disclosure.

Embodiments are set out in the following clauses:
Clause 1. A positive electrode active material, comprising: (a) a first particle having an olivine crystal structure, and having a first average particle diameter; (b) a second particle having an olivine crystal structure, and having a second average particle diameter smaller than the first average particle diameter; and (c) a third particle having a layered crystal structure, wherein, (i) each of the first particle and the second particle comprises a compound represented by Chemical Formula 1, (ii) the third particle comprises a compound represented by Chemical Formula 2, (iii) the first particle is in a form of a spherical secondary particle comprising a plurality of primary particles aggregated with each other, and (iv) the second particle is in a form of a single particle, and

   **Chemical Formula 1** Liₐ₁ Feₓ₁B1_{y1} PO_{4-b1}

   in Chemical Formula 1, 0.8≤a1≤1.2, 0.90≤x1≤0.999, 0.001≤y1≤0.1, 0≤b1≤0.05, and 0.99≤x1+y1≤1.01, and B1 being at least one element selected from among Ti, Mg, V, Al, Mn, and a combination thereof, and

   **Chemical Formula 2** Liₐ₂Niₓ2Co_{y2}Ma_{z2}X_{c2}O_{2-b2}

   in Chemical Formula 2, 0.8≤a2≤1.2, 0.8≤x2<1.0, 0<y2≤0.1, 0<z2≤0.1 0≤c2≤0.05, 0≤b2≤0.05 and 0.9≤x2+y2+z2+c2≤1.1, Ma being at least one element selected from among Al, Mn, and a combination thereof, and X being at least one element selected from among Ti, Mg, Zr, Al, and a combination thereof.
Clause 2. The positive electrode active material of Clause 1, wherein the first particle and the second particle are present in an amount of 70wt% to 95wt% based on a total weight of 100 wt% of the positive electrode active material, and wherein the third particle is present in an amount of 5wt% to 30wt% based on the total weight of 100 wt% of the positive electrode active material.
Clause 3. The positive electrode active material of Clause 1 or Clause 2, wherein a mixing ratio of the first particle to the second particle is 3:1 to 1:3 by weight.
Clause 4. The positive electrode active material of any preceding Clause, wherein a mixing ratio of the first particle to the second particle is 2:1 to 1:2 by weight.
Clause 5. The positive electrode active material of any preceding Clause, wherein the first particle comprises a first coating layer containing carbon, and wherein an amount of the carbon in the first particle is 1.5 wt% to 2.5wt % based on a total weight of 100 wt% of the first particle.
Clause 6. The positive electrode active material of Clause 5, wherein the first particle further comprises a grain boundary coating layer at an interface between the primary particles, and wherein the grain boundary coating layer contains carbon.
Clause 7. The positive electrode active material of any preceding Clause, wherein a porosity of the first particle is 20% to 40%.
Clause 8. The positive electrode active material of any preceding Clause, wherein the first average particle diameter is 3 µm to 7 µm.
Clause 9. The positive electrode active material of any preceding Clause, wherein the second particle comprises a second coating layer containing carbon, and wherein an amount of the carbon in the second particle is 0.5 wt% to 2 wt% based on a total weight of 100 wt% of the second particle.
Clause 10. The positive electrode active material of any preceding Clause, wherein the second average particle diameter is 0.5 µm to 2.5 µm.
Clause 11. The positive electrode active material of any preceding Clause, wherein the third particle comprises a third coating layer, and wherein the third coating layer comprises at least one selected from among a boron-containing compound, an aluminium-containing compound, and a combination thereof.
Clause 12. The positive electrode active material of any preceding Clause, wherein the third particle is in a form of a secondary particle comprising a plurality of primary particles, and wherein a third average particle diameter of the third particle is 8 µm to 20 µm.
Clause 13. The positive electrode active material of any preceding Clause, wherein the third particle is in a form of a single particle, and wherein a third average particle diameter of the third particle is 2 µm to 5 µm.
Clause 14. The positive electrode active material of any preceding Clause, wherein the third particle is in a mixed form comprising both: (a) a single particle; and (b) a secondary particle comprising a plurality of primary particles.
Clause 15. A positive electrode for a rechargeable lithium battery, the positive electrode comprising: (a) a positive electrode current collector; and (b) a positive electrode active material layer on the positive electrode current collector, wherein the positive electrode active material layer comprises the positive electrode active material of any one of Clauses 1 to 14, a conductive material, and a binder.
Clause 16. The positive electrode of Clause 15, wherein an amount of the binder is 0.5 parts by weight to 5 parts by weight relative to 100 parts by weight of the positive electrode active material layer.
Clause 17. The positive electrode of Clause 15 or Clause 16, wherein the binder comprises at least one selected from among polyvinyl alcohol, carboxymethyl cellulose, hydroxypropyl cellulose, diacetyl cellulose, polyvinylchloride, carboxylated polyvinylchloride, polyvinylfluoride, a polymer comprising ethylene oxide, polyvinylpyrrolidone, polyurethane, polytetrafluoroethylene, polyvinylidene fluoride, polyethylene, polypropylene, a styrene-butadiene rubber, a (meth)acrylate styrene-butadiene rubber, an epoxy resin, a (meth)acrylic resin, a polyester resin, nylon, and a combination thereof.
Clause 18. The positive electrode of any one of Clauses 15 to 17, wherein an amount of the conductive material is 0.5 parts by weight to 5 parts by weight relative to 100 parts by weight of the positive electrode active material layer.
Clause 19. The positive electrode of any one of Clause 15 to 18, wherein the conductive material comprises at least one selected from among a carbon-based material, a metal-based material in a form of a metal powder or a metal fiber, a conductive polymer, and a combination thereof.
Clause 20. A rechargeable lithium battery, comprising: (a) the positive electrode of any one of Clauses 15 to 19; (b) a negative electrode comprising a negative electrode current collector and a negative electrode active material layer on the negative electrode current collector; and (c) a separator between the positive electrode and the negative electrode.

## Claims

1. A positive electrode active material, comprising:
a first particle having an olivine crystal structure, and having a first average particle diameter;
a second particle having an olivine crystal structure, and having a second average particle diameter smaller than the first average particle diameter; and
a third particle having a layered crystal structure,
wherein,
each of the first particle and the second particle comprises a compound represented by Chemical Formula 1,
the third particle comprises a compound represented by Chemical Formula 2,
the first particle is in a form of a spherical secondary particle comprising a plurality of primary particles aggregated with each other, and
the second particle is in a form of a single particle, and
**Chemical Formula 1** Liₐ₁Feₓ₁B1_{y1}PO_{4-b1}
in Chemical Formula 1, 0.8≤a1≤1.2, 0.90≤x1≤0.999, 0.001≤y1≤0.1, 0≤b1≤0.05, and 0.99≤x1+y1≤1.05, and B1 being at least one element selected from among Ti, Mg, V, Al, Mn, and a combination thereof, and
**Chemical Formula 2** Liₐ₂Niₓ₂Coy₂Maz₂X_{c2}O_{2-b2}
in Chemical Formula 2, 0.8≤a2≤1.2, 0.8≤x2<1.0, 0<y2≤0.1, 0<z2≤0.1 0≤c2≤0.05, 0≤b2≤0.05 and 0.9≤x2+y2+z2+c2≤1.1, Ma being at least one element selected from among Al, Mn, and a combination thereof, and X being at least one element selected from among Ti, Mg, Zr, Al, and a combination thereof.

2. The positive electrode active material as claimed in claim 1,
wherein the first particle and the second particle are present in an amount of 70wt% to 95wt% based on a total weight of 100 wt% of the positive electrode active material, and
wherein the third particle is present in an amount of 5wt% to 30wt% based on the total weight of 100 wt% of the positive electrode active material.

3. The positive electrode active material as claimed in claim 1 or claim 2,
wherein a mixing ratio of the first particle to the second particle is 3:1 to 1:3 by weight,
optionally wherein a mixing ratio of the first particle to the second particle is 2:1 to 1:2 by weight.

4. The positive electrode active material as claimed in any preceding claim,
wherein the first particle comprises a first coating layer containing carbon, and
wherein an amount of the carbon in the first particle is 1.5 wt% to 2.5wt % based on a total weight of 100 wt% of the first particle,
optionally wherein the first particle further comprises a grain boundary coating layer at an interface between the primary particles, and
wherein the grain boundary coating layer contains carbon.

5. The positive electrode active material as claimed in any preceding claim, wherein:
(a) a porosity of the first particle is 20% to 40%, and/or
(b) the first average particle diameter is 3 µm to 7 µm.

6. The positive electrode active material as claimed in any preceding claim,
wherein the second particle comprises a second coating layer containing carbon, and
wherein an amount of the carbon in the second particle is 0.5 wt% to 2 wt% based on a total weight of 100 wt% of the second particle.

7. The positive electrode active material as claimed in any preceding claim,
wherein the second average particle diameter is 0.5 µm to 2.5 µm.

8. The positive electrode active material as claimed in any preceding claim,
wherein the third particle comprises a third coating layer, and
wherein the third coating layer comprises at least one selected from among a boron-containing compound, an aluminium-containing compound, and a combination thereof.

9. The positive electrode active material as claimed in any preceding claim,
wherein:
(a) the third particle is in a form of a secondary particle comprising a plurality of primary particles, and
a third average particle diameter of the third particle is 8 µm to 20 µm; and/or
(b) the third particle is in a form of a single particle, and
a third average particle diameter of the third particle is 2 µm to 5 µm.

10. The positive electrode active material as claimed in any preceding claim,
wherein the third particle is in a mixed form comprising both:
a single particle; and
a secondary particle comprising a plurality of primary particles.

11. A positive electrode for a rechargeable lithium battery, the positive electrode comprising:
a positive electrode current collector; and
a positive electrode active material layer on the positive electrode current collector,
wherein the positive electrode active material layer comprises the positive electrode active material as claimed in any one of claims 1 to 10, a conductive material, and a binder.

12. The positive electrode as claimed in claim 11,
wherein:
(a) an amount of the binder is 0.5 parts by weight to 5 parts by weight relative to 100 parts by weight of the positive electrode active material layer; and/or
(b) an amount of the conductive material is 0.5 parts by weight to 5 parts by weight relative to 100 parts by weight of the positive electrode active material layer

13. The positive electrode as claimed in claim 11 or claim 12,
wherein the binder comprises at least one selected from among polyvinyl alcohol, carboxymethyl cellulose, hydroxypropyl cellulose, diacetyl cellulose, polyvinylchloride, carboxylated polyvinylchloride, polyvinylfluoride, a polymer comprising ethylene oxide, polyvinylpyrrolidone, polyurethane, polytetrafluoroethylene, polyvinylidene fluoride, polyethylene, polypropylene, a styrene-butadiene rubber, a (meth)acrylate styrene-butadiene rubber, an epoxy resin, a (meth)acrylic resin, a polyester resin, nylon, and a combination thereof.

14. The positive electrode as claimed in any one of claims 11 to 13,
wherein the conductive material comprises at least one selected from among a carbon-based material, a metal-based material in a form of a metal powder or a metal fiber, a conductive polymer, and a combination thereof.

15. A rechargeable lithium battery, comprising,
the positive electrode as claimed in any one of claims 11 to 14;
a negative electrode comprising a negative electrode current collector and a negative electrode active material layer on the negative electrode current collector; and
a separator between the positive electrode and the negative electrode.
